# EUROPÄISCHE PATENTSCHRIFT

(11) **EP 4 330 162 B1**
(45) Veröffentlichungstag und Bekanntmachung des Hinweises auf die Patenterteilung: **25.06.2025**
(21) Anmeldenummer: 22722711.3
(22) Anmeldetag: 12.04.2022
(51) Int. Cl.: B65G 1/02, B65G 1/04, B65G 1/06

(54) **WARENLAGER MIT BEFAHRBAREN GASSEN**
GOODS WAREHOUSE WITH PASSABLE AISLES
ENTREPÔT DE MARCHANDISES AVEC ALLÉES CARROSSABLES

(30) Priorität: 27.04.2021 DE 102021110715
(43) Veröffentlichungstag der Anmeldung: 06.03.2024
(73) Patentinhaber: Nedcon B.V., 7005 AM Doetinchem (NL)
(72) Erfinder: FREDERIKS, Jan-Willem, 7009 AK Doetinchem (NL)
(74) Vertreter: Janke Scholl Patentanwälte PartG mbB
(86) Internationale Anmeldenummer: PCT/EP2022/059789
(87) Internationale Veröffentlichungsnummer: WO 2022/228893

(56) Entgegenhaltungen:
- DE-A1- 102014 114 496
- DE-A1- 102014 114 978
- DE-A1- 102019 104 372

## Beschreibung

Die Erfindung betrifft ein Warenlager mit einem Grundgestell aus vertikalen Stützen und horizontalen Traversen und mindestens einer durch das Grundgestell führenden Gasse für die Ein- und Auslagerung von Waren mittels eines auf zwei Schienen in der Gasse verfahrbaren Carriers, wobei die jeweilige Schiene aus einem horizontalen Schenkel, der eine Lauffläche für den Carrier bildet, und zumindest einem vertikalen Schenkel besteht, wobei die Schiene in einem sich nur über eine Teillänge der Schiene erstreckenden Befestigungsbereich mittels Befestigungselementen, vorzugsweise Schraubverbindungen, zumindest mittelbar an einer der Stützen und/oder Traversen befestigt ist, und wobei der vertikale Schenkel in dem Befestigungsbereich mit Löchern versehen ist, durch die die Befestigungselemente führen.

Warenlager, wie sie z. B. aus der DE 10 2019 104 372 A1 bekannt sind, sind Stückgutlager, bei denen die Ladeeinheiten, z. B. Waren oder mit Waren beladene Paletten, in einzelnen Kanälen hintereinander angeordnet werden oder sie zu beiden Seiten einer Gasse gelagert werden. Für das Ein- bzw. Auslagern oder auch Umlagern der Waren kommt ein selbstfahrendes Verteilerfahrzeug zum Einsatz, oft als "Shuttle" oder "Carrier" bezeichnet. Dieses Fahrzeug ist dazu ausgebildet, die Ware oder den Ladungsträger zu unterfahren, sodann anzuheben, und in dem so angehobenen Zustand an eine andere Position des Warenlagers zu transportieren. Derartige Verteilerfahrzeuge verfügen insbesondere über Mittel, um die Waren bzw. die die Waren stützenden Ladungsträger vollautomatisch anzuheben, aus den seitlich angeordneten Lagerpositionen in die Gasse zu ziehen und dann innerhalb und längs der Gasse zu bewegen. Die Schienen, auf denen die Rollen des Verteilerfahrzeugs laufen, sind wegen ihrer erheblichen Länge oft segmentiert, d. h. aus aufeinanderfolgenden Schienensegmenten in Gestalt von jeweils Profilen zusammengesetzt. Die Profile sind an dem Grundgestell des Warenlagers verschraubt, welches sich primär aus vertikalen Stützen und horizontalen Traversen zusammensetzt.

In Langzeitversuchen hat sich gezeigt, dass sich in dem Befestigungsbereich zwischen der Schiene und der Stütze und/oder der Traverse, genauer an den Löchern, durch die die Schiene an der Stütze und/oder Traversen zumindest mittelbar befestigt wurde, unter Impulslasten Risse ausgehend von den Löchern ausbilden, die sich mit der Zeit erweitern und dann den vertikalen Schenkel der Schiene durchlaufen. Dies führt zu einer Schwächung der Schiene. Der Rissbildung könnte entgegengetreten werden, indem die Materialstärke der Schiene erhöht würde. Dies führt jedoch zu einer Erhöhung des Materialbedarfs und damit einhergehend der Materialkosten.

Die kritischen Impulslasten entstehen insbesondere dort, wo der Carrier von einer Transporteinrichtung, bspw. einem Aufzug, auf die Schiene übersetzt. Häufig liegen die Laufflächen der Schienen und die Schienen an dem Aufzug nicht in einer Flucht zueinander, weisen vielmehr eine Höhendifferenz zueinander auf. Beim Verfahren des Carriers kann es so dazu kommen, dass dieser mit seinen Rollen die Höhendifferenz überwinden muss. Aufgrund der sich rasch bewegenden und zumeist schwer beladenen Carrier lösen selbst kleine Höhendifferenzen beim Übergang des Carriers Impulslasten auf den nächstgelegenen Befestigungsbereich der Schiene aus.

Die **Aufgabe** der Erfindung besteht darin, das bekannte Warenlager dahingehend weiterzuentwickeln, dass auch bei längerem Betrieb keine Rissbildung an der Schiene im Anbindungsbereich zwischen den Schienen und den Stützen bzw. Traversen auftritt.

Zur **Lösung** der Aufgabe wird vorgeschlagen, dass der vertikale Schenkel der Schiene in dem Befestigungsbereich aber außerhalb der Löcher mit mindestens einer Strukturschwächung in Gestalt einer Öffnung versehen ist, die sich schlitzartig im Wesentlichen in Längsrichtung der Schiene erstreckt und in einer Höhe näher zu dem horizontalen Schenkel als zu dem oberen Rand des vertikalen Schenkels angeordnet ist.

Vorzugsweise sind die den Befestigungszwecken dienenden Löcher in teils unterschiedlichen Höhen angeordnet, wobei die Strukturschwächung unterhalb des am tiefsten angeordneten Lochs, durch welches eines der Befestigungselemente führt, angeordnet ist.

Bevorzugt ist die Strukturschwächung, durch die hindurch kein Befestigungselement führt, zwischen den Löchern angeordnet, durch die Befestigungselemente hindurchführen und die in Längsrichtung der Schiene den Enden des Befestigungsbereichs nächstgelegen sind.

Durch die erfindungsgemäße Strukturschwächung noch unterhalb der zur Anbindung der Schiene an dem Grundgestell dienenden untersten Löcher wird eine erhöhte Flexibilität der Schiene in dem Anbindungsbereich erzielt. Insbesondere bei impulsartigen Belastungen der Schiene, bspw. beim Aufsetzen des Carriers auf der Schiene, führt diese gesteigerte Flexibilität im Anbindungsbereich dazu, dass eine Rissbildung ausgehend von den den Befestigungszwecken dienenden Löchern in der Schiene vermieden wird. Durch die Strukturschwächung wird die impulsartige Last in einer unkritischen Verformung des Bereiches um die Strukturschwächung aufgenommen, wobei die in der elastischen Verformung gespeicherte Energie anschließend wieder in einer vollständigen Rückverformung freigesetzt wird.

Um jegliches Einreißen der schlitzartigen Öffnung selbst bei sehr langem Betrieb zu verhindern, weist die Strukturschwächung vorzugsweise eine größtenteils abgerundete Kontur auf. Die möglichst runde bzw. abgerundete Gestaltung der Strukturschwächung sorgt für einen günstigen Kraftfluss und schließt formbedingte Kerbwirkung aus. Es ist denkbar, die Öffnung in einem Stanzverfahren herzustellen, wobei sich dabei auf der in Stanzrichtung weisenden Seite der Schiene eine leichte Ausstellung bildet, die die strukturelle Integrität der Öffnung gegenüber Rissbildung weiter verbessert.

Bevorzugt besteht die Strukturschwächung aus zwei zueinander beabstandeten, kreisförmigen Ausnehmungen, wobei die Ausnehmungen durch einen bogenförmig verlaufenden Schlitz miteinander verbunden sind. Mit anderen Worten handelt es sich bei der Strukturschwächung in Form einer Öffnung um einen gewölbten horizontalen Schlitz mit jeweils aufgeweiteten Enden, und zwar noch unterhalb des untersten Loches der Schiene. Diese Gestaltung sorgt dafür, dass bei einer impulsartigen Belastung der Schiene die Last nicht unmittelbar von der Schiene über die Befestigungselemente an die Traversen und/oder Stützen abgegeben wird, sondern auch ein Teil der Last in einer elastischen Verformung des Bereiches zwischen dem untersten Loch und der beabstandet darunter liegenden Öffnung aufgenommen wird.

Zur Anbindung der Schiene an die Stütze und/oder Traverse ist die Schiene vorzugsweise mit ihrem Befestigungsbereich über die Befestigungselemente an einer Konsole angeordnet, wobei die Konsole ihrerseits an einer der Stützen und/oder Traversen befestigt ist. Die Konsole liegt zumindest an dem vertikalen Befestigungsbereich der Schiene an und ist über Schraubverbindungen mit der Schiene verbunden. Mit einem anderen Ende ist die Konsole hingegen an einer Stütze oder eine Traverse befestigt, wobei hier auch eine Schraub- oder eine Schweißverbindung denkbar ist. Allerdings sind generell auch andere Verbindungsarten wie bspw. Niete möglich.

Zur Unterstützung der Lauffläche an dem horizontalen Schenkel der Schiene weist das Warenlager vorzugsweise einen Tragwinkel aus einem vertikalen und einem horizontalen Schenkel auf, wobei sich die Schenkel parallel zu den Schenkeln der Schiene nur über eine Teillänge der Schiene erstrecken, wobei der vertikale Schenkel des Tragwinkels an dem vertikalen Schenkel der Schiene über weitere Befestigungselemente befestigt ist, und der horizontale Schenkel des Tragwinkels den horizontalen Schenkel der Schiene untergreift.

Der Tragwinkel ist dazu eingerichtet, die Schiene in dem Anbindungsberiech zu der Stütze und/oder zu der Traverse hin zu unterstützen. Dazu liegt vorzugsweise der horizontale Schenkel der Schiene auf dem horizontalen Schenkel des Tragwinkels auf. Dies führt dazu, dass Lasten, die auf die Lauffläche der Schiene wirken, zusätzlich von dem horizontalen Schenkel der Schiene aufgenommen werden. Ferner ist es auch denkbar, dass die horizontalen Abschnitte des Tragwinkels und der Schiene ohne direkten Kontakt zueinander ausgebildet sind, sich jedoch die Lauffläche durch das Befahren eines Carriers absenkt und auf dem horizontalen Abschnitt des Tragwinkels zur Anlage kommt, bevor eine plastische Verformung der Lauffläche gegenüber dem vertikalen Schenkel der Schiene eintritt.

Vorzugsweise weist der Tragwinkel in seinem vertikalen Schenkel eine Aussparung auf, die eine zumindest mittelbare Befestigung des Befestigungsbereichs der Schiene an einer Stütze oder/und einer Traverse und ohne die Zwischenlage des Tragwinkels ermöglicht. Um einen seitlichen Versatz der Schiene, ausgelöst durch den Tragwinkel, zwischen der Schiene und der Konsole in Querrichtung zu Gasse zu vermeiden, ist der Tragwinkel mit der Aussparung versehen. Die Aussparung ermöglicht eine unmittelbare Befestigung der Konsole an dem Befestigungsbereich, so dass der Tragwinkel die Konsole zumindest teilweise umläuft. Mithin sind die Tragwinkel nicht an den Konsolen befestigt und können sogar kontaktlos zu diesen ausgebildet sein.

Ferner ist es jedoch auch denkbar, dass die Tragwinkel durch ihre Formgebung an den Konsolen anliegen, bzw. mit den Konsolen form- bzw. stoffschlüssig verbunden sind.

Grundsätzlich sind die Tragwinkel dazu ausgebildet, an den Befestigungsbereichen der Schienen angeordnet zu werden, wobei vorzugsweise mehrere der Befestigungsbereiche in einem Abstand von jeweils 1 m bis 1,5 m zueinander über die Schiene verteilt angeordnet sind. Grundsätzlich sind aber auch entsprechend angepasste, größere und/oder auch kleinere Abstände zwischen den Befestigungsbereichen denkbar. Da die Befestigungsbereiche im Ent- und Beladebereich einer Schiene am stärksten belastet sind, ist es allerdings auch denkbar, die Tragwinkel nur in diesem Bereich anzuordnen.

Vorzugsweise befindet sich an dem vertikalen und dem horizontalen Schenkel des Tragwinkels ein sich gegenüber der Gasse aufweitender Bereich, wobei der aufgeweitete Bereich des Tragwinkels über das Ende der Schiene hinausreicht und als Einführhilfe beim Aufsetzen des Carriers auf die Schiene ausgebildet ist. Diese Maßnahme am Tragwinkel sorgt dafür, dass keine speziellen Schienen mit ähnlichen Merkmalen für den Ent- und Beladebereich ausgebildet werden müssen und somit nur Schienen einer Ausführungsform verwendet werden können. Hingegen können auch die Tragwinkel mit einem aufgeweiteten Bereich in Befestigungsbereichen verwendet werden, die nicht den Ent- und Beladebereich einer Schiene darstellt.

Vorzugsweise weist die Schiene einen weiteren horizontalen Schenkel auf, der an dem oberen Rand des vertikalen Schenkels anschließt und von der Gasse weg weisend oder zu der Gasse hin weisend ausgebildet ist. Ferner weist die Schiene bevorzugt einen weiteren vertikalen Schenkel auf, der sich an dem zur Gasse weisenden Ende des horizontalen Schenkels, nach unten oder oben weisend, anschließt. Die weiteren Schenkel der Schiene sorgen für eine höhere Aussteifung und eine damit einhergehende Erhöhung der Tragfertigkeit.

Aufgrund der ausgesteiften Form der Schiene sowie durch die Unterstützung der Lauffläche durch den Tragwinkel, weist die Schiene vorzugsweise eine Materialstärke von lediglich 2 mm bis 4 mm auf. Allerdings sind auch größere und/oder kleinere Materialstärken, abhängig der Schienenlänge und er prognostizierten Last denkbar. Durch die Unterstützung der Schiene im Anbindungsbereich und durch ihre generell ausgesteifte Form, ist es somit möglich, die Materialstärke der Schiene gegenüber den Schienen aus dem Stand der Technik zu reduzieren und Materialkosten bei der Herstellung einzusparen.

Weitere Maßnahmen werden nachstehend gemeinsam mit der Beschreibung eines bevorzugten Ausführungsbeispiels der Erfindung anhand der Figuren näher erläutert. Dabei zeigt:
- Figur 1: eine perspektivische Ansicht einer Stütze mit Traverse und daran angeordneter Schiene;
- Figur 2: eine rückwärtige Ansicht einer Traverse mit daran angeordneter Schiene;
- Figur 3: eine perspektivische Ansicht der Schiene mit Strukturschwächung; und
- Figur 4: eine perspektivische Ansicht eines Tragwinkels.

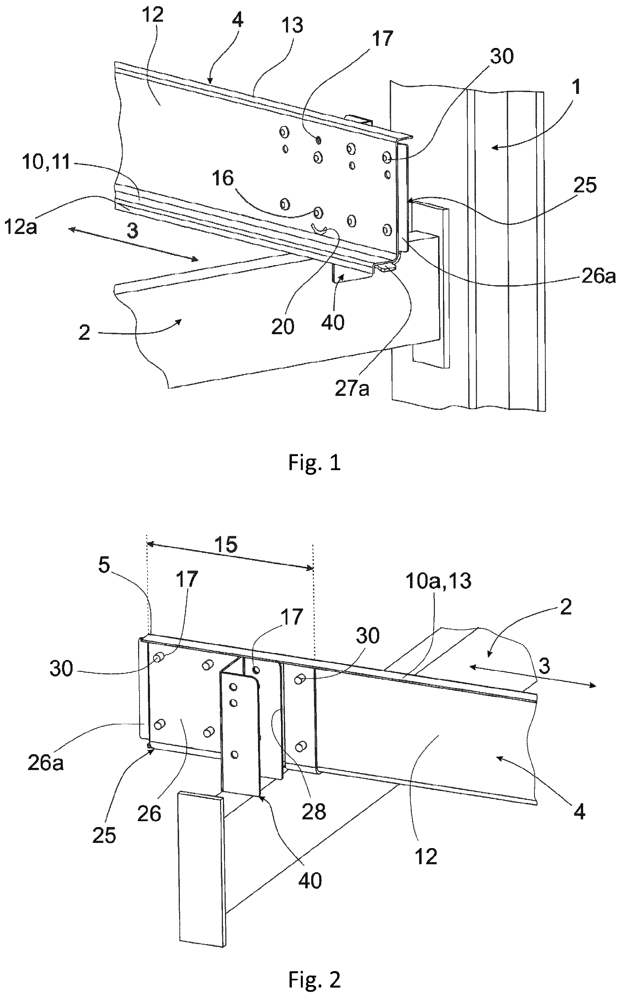

Die Figur 1 zeigt als Bestandteile eines Warenlagers Teile eines Grundgestells, nämlich eine vertikale Stütze 1 und eine daran befestigte horizontale Traverse 2. Quer zu der Traverse 2 ist oberseitig auf der Traverse 2 eine Schiene 4 befestigt, die zwischen sich und einer parallelen, nicht dargestellten zweiten Schiene eine Gasse 3 bildet. Die Gasse 3 ist für die Ein- und Auslagerung von Waren mittels eines längs der Gasse 3 auf den zwei Schienen 4 verfahrbaren Carriers ausgebildet. Der Carrier ist ein motorbetriebenes Transportvehikel, das auf mindestens vier Rollen und aus eigener Kraft innerhalb des Warenlagers auf den Schienen 4 verfahrbar ist. Dazu besteht der Carrier beispielsweise aus einem Grundkörper, der sowohl die Auflage für die zu befördernde Ware, als auch als Lagerung für die Rollen dient. In entsprechenden Warenlagern sind eine Vielzahl von Carriern vorhanden, die über Software eines Zentralcomputers gesteuert werden.

Die jeweilige Schiene 4 besteht einteilig aus einem horizontalen Schenkel 10, dessen Oberseite die Lauffläche 11 für den Carrier bildet, und einem vertikalen Schenkel 12, der die seitliche Laufflächenbegrenzung für den Carrier darstellt. Die Schiene 4 besteht aus einem rechteckigen, kalt umgeformten Stahlblech mit einer Materialstärke von 2 mm bis 4 mm.

Gemäß Figur 2 weist die Schiene 4 einen sich nur über eine Teillänge der Schiene 4 erstreckenden Befestigungsbereich 15 an ihrem vertikalen Schenkel 12 auf. Nur mit dem Befestigungsbereich 15 ist die Schiene 4 an einer Konsole 40 angeordnet. Grundsätzlich, wenn auch nicht dargestellt, sind mehrere der Befestigungsbereiche 15 über die Schiene 4 verteilt angeordnet. Der vertikale Schenkel 12 der Schiene 4 sowie die Konsole 20 sind in dem Befestigungsbereich 15 mit zueinander fluchtenden Löchern 17 versehen, durch die die Schiene 4 mittels Befestigungselementen 16 in Form von Schraubverbindungen an der Konsole 40 befestigt ist. Mit ihrer Unterseite ist die Konsole 40 z. B. an der Traverse 2 befestigt.

Ferner ist auf der Rückseite der Schiene 4 ein Tragwinkel 25 befestigt, bestehend aus einem vertikalen und einem horizontalen Schenkel 26, 27. Die Schenkel 26, 27 erstrecken sich nur über eine Teillänge der Schiene 4 und sind parallel zu den Schenkeln 10, 12 der Schiene 4 ausgebildet. Der vertikale Schenkel 26 des Tragwinkels 25 ist an dem vertikalen Schenkel 12 der Schiene 4 befestigt, wobei der horizontale Schenkel 27 des Tragwinkels 25 den horizontalen Schenkel 10 der Schiene 4 untergreift. Zur Anbindung des Tragwinkels 25 an der Schiene 4 ist die Schiene 4 mit weiteren Löchern 17 ausgebildet, die fluchtend zu Löchern 17 in dem Tragwinkel 25 ausgerichtet sind. Um einen Formschluss zwischen der Schiene 4 und dem Tragwinkel 25 herzustellen, sind weitere Befestigungselemente 30, in Form von Verschraubungen oder Nieten in den Löchern 17 der Schiene 4 und des Tragwinkels 25 angeordnet.

Ergänzend zu der unterstützenden Wirkung des Tragwinkels 25 für die Lauffläche 11 der Schiene 4 befindet sich an dem vertikalen und dem horizontalen Schenkel 26, 27 des Tragwinkels 25 ein sich schräg aufweitender Bereich 26a, 27a. Der aufgeweitete Bereich wird dadurch gebildet, dass sich der sonst parallel zu dem vertikalen Schenkel 12 der Schiene 4 verlaufende vertikale Schenkel 26 in einem Teilbereich von der Gasse 3 weg weisend aufweitet. Ebenso verhält es sich mit dem horizontalen Schenkel 27 des Tragwinkels 25, der sich nach unten weg aufweitet.

Der aufgeweitete Bereich 26a, 27a des Tragwinkels 25 ist so ausgebildet, dass er über das Ende der Schiene 4 hinaus reicht, und er so als Einführhilfe beim erstmaligen Auffahren des Carriers auf die Schiene 4 dient.

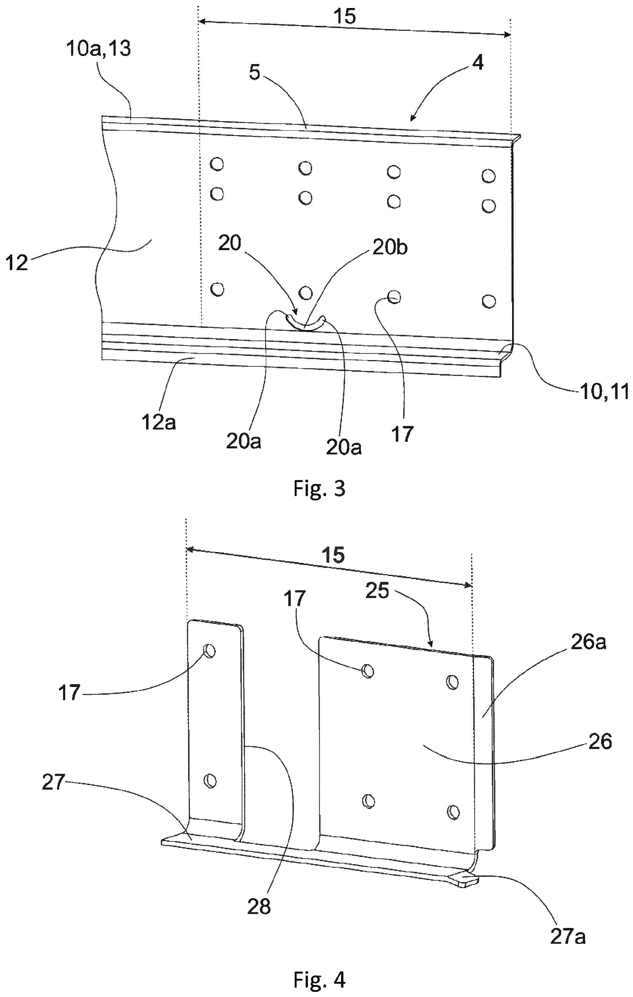

Um einen seitlichen Versatz der Schiene 4, ausgelöst durch den Tragwinkel 25 zwischen der Schiene 4 und der Konsole 40 in Querrichtung zu Gasse 3 zu vermeiden, ist der Tragwinkel 25, gemäß der Figuren 2 und 4, mit einer Aussparung 28 versehen, die eine unmittelbare Befestigung der Konsole 40 an dem Befestigungsbereich 15 der Schiene 4 ermöglicht. Folglich ist der Tragwinkel 25 derart ausgebildet, dass er die Konsole 40 zumindest auf drei Seitenumrahmt. Mithin ist der Tragwinkel 25 nicht unmittelbar an der Konsole 40 angebunden.

Figur 3 zeigt eine perspektivische Ansicht der Schiene 4 mit einer Strukturschwächung 20 in dem vertikalen Schenkel 12 der Schiene. Die Strukturschwächung 20, durch die keinerlei Befestigungselement hindurchführt und die daher offen ist, ist in einer Höhe näher zu dem horizontalen Schenkel 10 als zu dem oberen Rand 13 des vertikalen Schenkels 12 und ist vorzugsweise noch unterhalb des am tiefsten angeordneten Lochs 17 in dem Befestigungsbereich 15 angeordnet.

Insbesondere ist die Strukturschwächung 20 zwischen den Löchern 17 angeordnet, die in Längsrichtung der Schiene 4 den Enden des Befestigungsbereichs 15 nächstgelegen sind. Diese Anordnung der Strukturschwächung 20 hat den Sinn, dass die den Enden des Befestigungsbereichs 15 nächstgelegen Löcher 17 ausschließlich dazu ausgebildet sind, mit dem Tragwinkel 25 verbunden zu werden, so dass der Tragwinkel 25 die Abschnitte des Befestigungsbereiches 15, die die Strukturschwächung 20 umgeben, besonders aussteift.

Die Strukturschwächung 20 wird gebildet aus einer schlitzförmigen und sich vorwiegend horizontal erstreckenden Öffnung 20 von abgerundeter Kontur. Genauer gesagt besteht die Öffnung 20 aus zwei horizontal zueinander beabstandeten Ausnehmungen 20a, wobei die Ausnehmungen 20a durch einen bogenförmig verlaufenden Schlitz 20b miteinander verbunden sind.

Nicht dargestellt ist eine Ausführung, bei der die Ausnehmungen 20a einen größeren Durchmesser aufweisen, als der sie verbindende Schlitz 20b einen Querschnitt aufweist. Die Vergrößerung an den Ausnehmungen 20a sorgt dafür, dass die Kerbwirkung weiter reduziert wird.

In Figur 3 ist dargestellt, dass die Schiene 4 einen weiteren horizontalen Schenkel 10a aufweist, der an dem oberen Rand 13 des vertikalen Schenkels 12 anschließt und von der Gasse 3 weg weisend ausgebildet ist. Unter derselben Zielsetzung, der weiteren Aussteifung der Schiene, weist diese noch einen weiteren vertikalen Schenkel 12a auf, der sich an dem zur Gasse 3 weisenden Ende des horizontalen Schenkels 10, nach unten weisend anschließt.

### Bezugszeichenliste

- 1: Stütze
- 2: Traversen
- 3: Gasse
- 4: Schiene
- 5: Ende Schiene

- 10: horizontaler Schenkel
- 10a: horizontaler Schenkel
- 11: Lauffläche
- 12: vertikaler Schenkel
- 12a: vertikaler Schenkel

- 13: oberer Rand

- 15: Befestigungsbereich
- 16: Befestigungselement, Schraube
- 17: Loch

- 20: Strukturschwächung/Öffnung
- 20a: Ausnehmung
- 20b: Schlitz

- 25: Tragwinkel
- 26: vertikaler Schenkel
- 26a: aufgeweiteter Bereich
- 27: horizontaler Schenkel
- 27a: aufgeweiteter Bereich
- 28: Aussparung

- 30: Befestigungselement, Schraube

- 40: Konsole

## Patentansprüche

1. Warenlager mit einem Grundgestell aus vertikalen Stützen (1) und horizontalen Traversen (2) und mit mindestens einer durch das Grundgestell führenden Gasse (3) für die Ein- und Auslagerung von Waren mittels eines auf zwei Schienen (4) in der Gasse (3) verfahrbaren Carriers, wobei die jeweilige Schiene (4) aus einem horizontalen Schenkel (10), der eine Lauffläche (11) für den Carrier bildet, und zumindest einem vertikalen Schenkel (12) besteht, wobei die Schiene (4) in einem sich nur über eine Teillänge der Schiene (4) erstreckenden Befestigungsbereich (15) mittels Befestigungselementen (16), vorzugsweise Schraubverbindungen, zumindest mittelbar an einer der Stützen (1) und/oder Traversen (2) befestigt ist, und wobei der vertikale Schenkel (12) in dem Befestigungsbereich (15) mit Löchern (17) versehen ist, durch die die Befestigungselemente (16) führen, **dadurch gekennzeichnet, dass** der vertikale Schenkel (12) in dem Befestigungsbereich (15) aber außerhalb der Löcher (17) mit mindestens einer Strukturschwächung (20) in Gestalt einer Öffnung versehen ist, die sich schlitzartig im Wesentlichen in Längsrichtung der Schiene (4) erstreckt und in einer Höhe näher zu dem horizontalen Schenkel (10) als zu dem oberen Rand (13) des vertikalen Schenkels (12) angeordnet ist.

2. Warenlager nach Anspruch 1, **dadurch gekennzeichnet, dass** die Löcher (17) in teils unterschiedlichen Höhen angeordnet sind, und dass die Strukturschwächung (20) unterhalb des am tiefsten angeordneten Lochs (17), durch welches eines der Befestigungselemente (16) führt, angeordnet ist.

3. Warenlager nach Anspruch 1 oder 2, **dadurch gekennzeichnet, dass** die Strukturschwächung (20) zwischen den Löchern (17) angeordnet ist, die in Längsrichtung der Schiene (4) den Enden des Befestigungsbereichs (15) nächstgelegen sind.

4. Warenlager nach einem der vorangehenden Ansprüche, **gekennzeichnet durch** einen Tragwinkel (25) aus einem vertikalen und einem horizontalen Schenkel (26, 27), wobei sich die Schenkel (26, 27) parallel zu den Schenkeln (10, 12) der Schiene (4) nur über eine Teillänge der Schiene (4) erstrecken, wobei der vertikale Schenkel (26) des Tragwinkels (25) an dem vertikalen Schenkel (12) der Schiene (4) über weitere Befestigungselemente (30) befestigt ist, und der horizontale Schenkel (27) des Tragwinkels (25) den horizontalen Schenkel (10) der Schiene (4) untergreift.

5. Warenlager nach Anspruch 4, **dadurch gekennzeichnet, dass** der Tragwinkel (25) in seinem vertikalen Schenkel (26) eine Aussparung (28) aufweist, die eine zumindest mittelbare Befestigung des Befestigungsbereichs (15) der Schiene (4) an einer Stütze (1) oder/und einer Traverse (2) ermöglicht.

6. Warenlager nach einem der Ansprüche 4 oder 5, **dadurch gekennzeichnet, dass** sich an dem vertikalen und dem horizontalen Schenkel (26, 27) des Tragwinkels (25) ein sich gegenüber der Gasse (3) aufweitender Bereich (26a, 27a) befindet, wobei der aufgeweitete Bereich (26a, 27a) des Tragwinkels (25) über das Ende (4a) der Schiene (3) hinausreicht und als Einführhilfe beim Aufsetzen des Carriers auf die Schiene (4) ausgebildet ist.

7. Warenlager nach einem der vorangehenden Ansprüche, **dadurch gekennzeichnet, dass** die Schiene (4) einen weiteren horizontalen Schenkel (10a) aufweist, der an dem oberen Rand (13) des vertikalen Schenkels (12) anschließt und von der Gasse (3) weg weisend oder zur Gasse (3) hin weisend ausgebildet ist.

8. Warenlager nach einem der vorangehenden Ansprüche, **dadurch gekennzeichnet, dass** die Schiene (4) einen weiteren vertikalen Schenkel (12a) aufweist, der sich an dem zur Gasse (3) weisenden Ende des horizontalen Schenkels (10), nach unten oder oben weisend, anschließt.

9. Warenlager Anspruch einem der vorangehenden Ansprüche, **dadurch gekennzeichnet, dass** die Schiene (4) mit ihrem Befestigungsbereich (15) über die Befestigungselemente (16) an einer Konsole (40) angeordnet ist, wobei die Konsole (40) an einer der Stützen (1) und/oder Traversen (2) befestigt ist.

10. Warenlager nach einem der vorangehenden Ansprüche, **dadurch gekennzeichnet, dass** die Strukturschwächung (20) eine größtenteils abgerundete Kontur aufweist.

11. Warenlager nach Anspruch 10, **dadurch gekennzeichnet, dass** die Strukturschwächung (20) aus zwei zueinander beabstandeten, kreisförmigen Ausnehmungen (20a) besteht, wobei die Ausnehmungen (20a) durch einen bogenförmig verlaufenden Schlitz (20b) miteinander verbunden sind.

## Claims

1. Storage facility with a base frame consisting of vertical supports (1) and horizontal crosspieces (2) and with at least one aisle (3) leading through the base frame for the storage and removal of goods by means of a carrier which is movable on two rails (4) in the aisle (3), wherein the respective rail (4) consists of a horizontal limb (10), which forms a running surface (11) for the carrier, and at least one vertical limb (12), wherein the rail (4), in a fastening region (15) extending only over a partial length of the rail (4), is fastened at least indirectly by means of fastening elements (16), preferably screw connections, to one of the supports (1) and/or crosspieces (2), and wherein the vertical limb (12), in the fastening region (15), is provided with holes (17) through which the fastening elements (16) lead, **characterized in that** the vertical limb (12), in the fastening region (15) but outside the holes (17), is provided with at least one structural weakening (20) in the form of an opening, which extends in the manner of a slot substantially in the longitudinal direction of the rail (4) and is arranged at a height closer to the horizontal limb (10) than to the upper edge (13) of the vertical limb (12).

2. Storage facility according to Claim 1, **characterized in that** the holes (17) are arranged at partly different heights, and **in that** the structural weakening (20) is arranged below the deepest hole (17) through which one of the fastening elements (16) leads.

3. Storage facility according to Claim 1 or 2, **characterized in that** the structural weakening (20) is arranged between the holes (17) which are closest to the ends of the fastening region (15) in the longitudinal direction of the rail (4).

4. Storage facility according to any one of the preceding claims, **characterized by** a support bracket (25) consisting of a vertical and a horizontal limb (26, 27), wherein the limbs (26, 27) extend parallel to the limbs (10, 12) of the rail (4) only over a partial length of the rail (4), wherein the vertical limb (26) of the support bracket (25) is fastened to the vertical limb (12) of the rail (4) via further fastening elements (30), and the horizontal limb (27) of the support bracket (25) engages under the horizontal limb (10) of the rail (4).

5. Storage facility according to Claim 4, **characterized in that** the support bracket (25) has, in its vertical limb (26), a clearance (28) which allows at least indirect fastening of the fastening region (15) of the rail (4) to a support (1) or/and to a crosspiece (2).

6. Storage facility according to either of Claims 4 and 5, **characterized in that** a region (26a, 27a) which widens in relation to the aisle (3) is located on the vertical and the horizontal limb (26, 27) of the support bracket (25), wherein the widened region (26a, 27a) of the support bracket (25) extends beyond the end (4a) of the rail (3) and is designed as an insertion aid when placing the carrier onto the rail (4).

7. Storage facility according to any one of the preceding claims, **characterized in that** the rail (4) has a further horizontal limb (10a), which is connected to the upper edge (13) of the vertical limb (12) and is formed facing away from the aisle (3) or facing toward the aisle (3).

8. Storage facility according to any one of the preceding claims, **characterized in that** the rail (4) has a further vertical limb (12a), which is connected, facing downward or upward, to that end of the horizontal limb (10) which faces toward the aisle (3).

9. Storage facility according to any one of the preceding claims, **characterized in that** the rail (4) with its fastening region (15) is arranged on a bracket (40) via the fastening elements (16), wherein the bracket (40) is fastened to one of the supports (1) and/or crosspieces (2).

10. Storage facility according to any one of the preceding claims, **characterized in that** the structural weakening (20) has a largely rounded contour.

11. Storage facility according to Claim 10, **characterized in that** the structural weakening (20) consists of two mutually spaced-apart, circular recesses (20a), wherein the recesses (20a) are connected to each other by an arcuate slot (20b).

## Revendications

1. Entrepôt de marchandises avec un châssis de base composé de montants verticaux (1) et de traverses horizontales (2) et avec au moins une allée (3) traversant le châssis de base pour le stockage et le déstockage de marchandises au moyen d'un chariot pouvant se déplacer sur deux rails (4) dans l'allée (3), le rail respectif (4) étant constitué d'une branche horizontale (10), qui forme une surface de roulement (11) pour le chariot, et d'au moins une branche verticale (12), le rail (4) étant fixé dans une zone de fixation (15) qui ne s'étend que sur une longueur partielle du rail (4) au moyen d'éléments de fixation (16), de préférence de liaisons par vis, au moins indirectement à l'un des montants (1) et/ou des traverses (2), et la branche verticale (12) étant pourvue, dans la zone de fixation (15), de trous (17) à travers lesquels passent les éléments de fixation (16), **caractérisé en ce que** la branche verticale (12) est pourvue, dans la zone de fixation (15) mais à l'extérieur des trous (17), d'au moins un affaiblissement structurel (20) sous la forme d'une ouverture qui s'étend à la manière d'une fente essentiellement dans la direction longitudinale du rail (4) et qui est agencé à une hauteur plus proche de la branche horizontale (10) que du bord supérieur (13) de la branche verticale (12).

2. Entrepôt de marchandises selon la revendication 1, **caractérisé en ce que** les trous (17) sont agencés à des hauteurs partiellement différentes, et **en ce que** l'affaiblissement structurel (20) est agencé au-dessous du trou (17) agencé le plus bas, à travers lequel passe l'un des éléments de fixation (16).

3. Entrepôt de marchandises selon la revendication 1 ou 2, **caractérisé en ce que** l'affaiblissement structurel (20) est agencé entre les trous (17) qui sont les plus proches des extrémités de la zone de fixation (15) dans la direction longitudinale du rail (4).

4. Entrepôt de marchandises selon l'une quelconque des revendications précédentes, **caractérisé par** une équerre de support (25) composée d'une branche verticale et d'une branche horizontale (26, 27), les branches (26, 27) s'étendant parallèlement aux branches (10, 12) du rail (4) uniquement sur une longueur partielle du rail (4), la branche verticale (26) de l'équerre de support (25) étant fixée à la branche verticale (12) du rail (4) par d'autres éléments de fixation (30), et la branche horizontale (27) de l'équerre de support (25) s'engageant sous la branche horizontale (10) du rail (4).

5. Entrepôt de marchandises selon la revendication 4, **caractérisé en ce que** l'équerre de support (25) présente dans sa branche verticale (26) un évidement (28) qui permet une fixation au moins indirecte de la zone de fixation (15) du rail (4) sur un montant (1) ou/et une traverse (2).

6. Entrepôt de marchandises selon l'une quelconque des revendications 4 ou 5, **caractérisé en ce qu'**une zone (26a, 27a) s'élargissant par rapport à l'allée (3) se trouve sur la branche verticale et la branche horizontale (26, 27) de l'équerre de support (25), la zone élargie (26a, 27a) de l'équerre de support (25) s'étendant au-delà de l'extrémité (4a) du rail (3) et étant réalisée sous forme d'aide à l'introduction lors de la mise en place du chariot sur le rail (4).

7. Entrepôt de marchandises selon l'une quelconque des revendications précédentes, **caractérisé en ce que** le rail (4) présente une autre branche horizontale (10a) qui se raccorde au bord supérieur (13) de la branche verticale (12) et qui est réalisée en étant orientée à l'opposé de l'allée (3) ou en direction l'allée (3).

8. Entrepôt de marchandises selon l'une quelconque des revendications précédentes, **caractérisé en ce que** le rail (4) présente une autre branche verticale (12a) qui se raccorde à l'extrémité de la branche horizontale (10) orientée vers l'allée (3), vers le bas ou vers le haut.

9. Entrepôt de marchandises selon l'une quelconque des revendications précédentes, **caractérisé en ce que** le rail (4) est agencé avec sa zone de fixation (15) sur une console (40) par l'intermédiaire des éléments de fixation (16), la console (40) étant fixée à l'un des montants (1) et/ou des traverses (2).

10. Entrepôt de marchandises selon l'une quelconque des revendications précédentes, **caractérisé en ce que** l'affaiblissement structurel (20) présente un contour en grande partie arrondi.

11. Entrepôt de marchandises selon la revendication 10, **caractérisé en ce que** l'affaiblissement structurel (20) est constitué de deux évidements circulaires (20a) espacés l'un de l'autre, les évidements (20a) étant reliés entre eux par une fente (20b) s'étendant en forme d'arc.
